# EUROPEAN PATENT APPLICATION

(11) **EP 1 712 805 A1**
(43) Date of publication of application: **18.10.2006**
(21) Application number: 05425087.3
(22) Date of filing: 21.02.2005
(51) Int. Cl.: F16C 17/02, E06B 9/60

(54) **Bearing made of self-lubricating material for spring-holder boxes of roller doors and shutters and spring-holder device equipped with such bearing**

(71) Applicant: Gnaccarini, Mario, 10098 Rivoli (TO) (IT)
(72) Inventor: Gnaccarini, Mario, 10098 Rivoli (TO) (IT)
(74) Representative: Garavelli, Paolo

(57) **Abstract**

A bearing (1) is disclosed which is made of self-lubricating material and is adapted to be used as rolling means of spring-holder boxes on a winding shaft for rolling gates and rolling shutters, such bearing (1) being a ring equipped with a central through-hole (3) adapted to allow the winding shaft of rolling gates and rolling shutters to pass therethrough; a spring-holder device (10) is further disclosed for rolling gates and rolling shutters comprising at least two supporting disks (11), each one of such supporting disks (11) being equipped at its own center with a through-hole (12), adapted to allow a winding shaft to pass therethrough, and with a housing seat of the bearing (1) that is concentric to the through-hole (12), and with a plurality of spacers adapted to mirror-like connect and to mutually space the supporting disks (11).

## Description

The present invention refers to a revolving member made of self-lubricating material for spring-holder boxes of rolling gates and rolling shutters and to a spring-holder device equipped with such member.

As known, rolling shutters and rolling gates (herein below, for simplicity, globally called "rolling gates") can be handled with winding systems equipped with a fixed or rotary shaft; the winding system with fixed winding shaft is equipped with two or more substantially cylindrical spring-holder boxes, coaxial with the winding shaft and rotating thereon; function of these spring-holder boxes, to which a rolling gate side is secured, is supporting and allowing winding the rolling gate around the winding shaft and containing the spiral-shaped compensating spring, this latter one having the task of counterbalancing, at least partially, the rolling gate weight, returning during the opening phase, the energy stored as torque during the closing step, thereby making it easier to handle it by an operator.

Known spring-holder boxes are generally composed of a containing case comprising two supporting disks, mutually spaced by a series of metal tongues constrained thereto, each one equipped in its central position with a hole adapted to allow the shaft to pass; next to such hole, cages are generally secured for containing the rolling rollers, similar to roller bearings but with a much lower mechanical accuracy, adapted to decrease the revolving friction between shaft and spring-holder box when actuating the rolling gate. The rolling rollers, like typically all above-mentioned components of known spring-holder boxes, are almost universally manufactured of metal material, typically sheet, through a series of mechanical workings aimed to shear and mould them. Rarely, for economic reasons, rolling rollers can be found that are manufactured by solids turning.

In known spring-holder boxes as previously described, the metal rolling rollers, however, after a first phase of use of the rolling gate in which they efficiently reduce the wear, due to the deposit of dust, residues, scales and/or mechanical distortion, physiologically tend to reduce their efficiency, till they block, ruining the external shaft surface and making it extremely tiring, if not impossible, to actuate the rolling gate; moreover, due to the presence of rollers, it is necessary to provide for the manufacture of different boxes with different sizes of holes and roller-holder case depending on the different diameters of shaft on which they must be operated.

Moreover, the use of metal material for manufacturing rolling rollers, particularly sheet, requires a high number of mechanical workings that negatively affect the finished product cost.

Therefore, object of the present invention is solving the above prior-art problems by providing a revolving member made of self-lubricating material for spring-holder boxes of rolling gates and rolling shutters that efficiently replaces the rolling rollers of known spring-holder boxes, resulting at the same time of a simple and economic production and making the operation of spring-holder boxes more reliable in time.

Another object of the present invention is providing a revolving member made of self-lubricating material for spring-holder boxes of rolling gates and rolling shutters that allows easily and economically adapting the same spring-holder boxes to winding shafts having different diameters.

Moreover, another object of the present invention is providing a spring-holder device for rolling gates and rolling shutters equipped with a revolving member made of self-lubricating material that is reliable and simpler and adapted to be more cheaply produced with respect to known spring-holder boxes.

Another object of the present invention is providing a spring-holder device for rolling gates and rolling shutters equipped with a revolving member made of self-lubricating material that can be easily adapted for being installed on shafts with different diameters.

The above and other objects and advantages of the invention, as will appear from the following description, are obtained by a revolving member made of self-lubricating material for spring-holder boxes of rolling gates and rolling shutters as disclosed in claim 1.

Moreover, the above and other objects and advantages of the invention are obtained by a spring-holder device for rolling gates and rolling shutters equipped with a revolving member made of self-lubricating material as disclosed in claim 19.

Preferred embodiments and non-trivial variations of the present invention are the subject matter of the dependent claims.

The present invention will be better described by some preferred embodiments thereof, provided as a non-limiting example, with reference to the enclosed drawings, in which:
- FIG. 1 shows a front view of a preferred embodiment of the revolving member made of self-lubricating material for spring-holder boxes of rolling gates and rolling shutters according to the present invention;
- FIG. 2 shows a sectional view of another preferred embodiment of the revolving member made of self-lubricating material for spring-holder boxes of rolling gates and rolling shutters according to the present invention;
- FIG. 3 shows a rear view of the revolving member of FIG. 2;
- FIG. 4 shows a front view of a further embodiment of the revolving member made of self-lubricating material for spring-holder boxes of rolling gates and rolling shutters according to the present invention;
- FIG. 5 shows a rear perspective view of a preferred embodiment of the spring-holder device for rolling gates and rolling shutters equipped with a revolving member made of self-lubricating material; and
- FIG. 6 shows a front perspective view of the spring-holder device of FIG. 4.

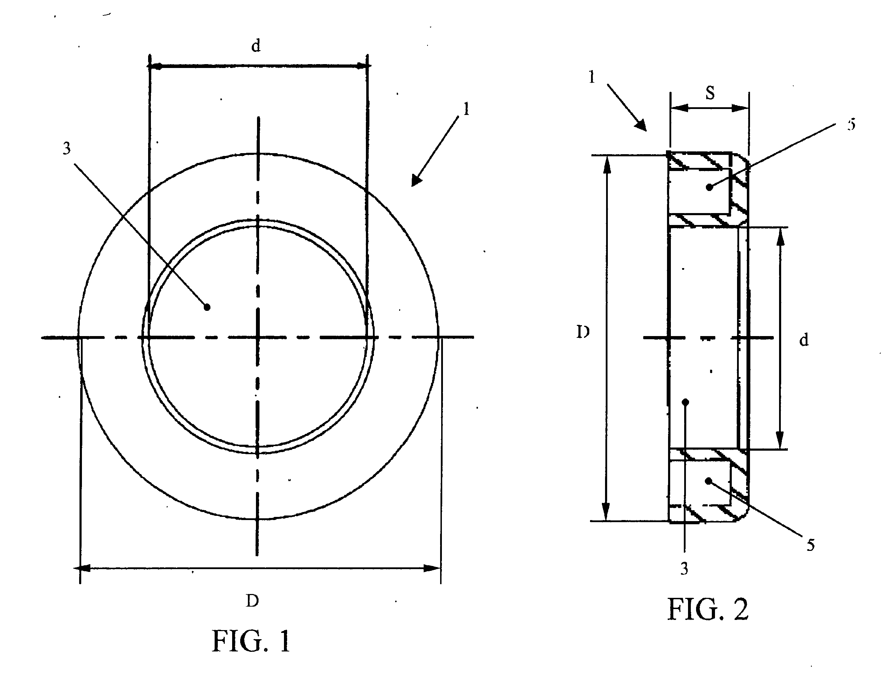

With reference to FIG. 1, 2 and 3, it is possible to note that the revolving member 1 made of self-lubricating material for spring-holder boxes of rolling gates and rolling shutters according to the present invention is preferably a ring made of self-lubricating material having a central through-hole 3 adapted to allow the passage of a winding shaft (not shown) of the rolling gate or shutter within the tolerance limits imposed by the correct operation of the revolving member; the revolving member 1, due to its own self-lubricating characteristics, can therefore be used as replacement of traditional roller bearings, or of any other known revolving system, usually employed in known spring-holder boxes note. For such purpose, an internal diameter d of the central through-hole 3 can obviously be determined in such a way as to propose a revolving member 1 that is able to be easily coupled with any existing winding shaft: in particular, taking into account the most used winding shaft diameters, the internal diameter d of the central through-hole 3 is preferably included between 32 and 34 mm, still more preferably equal to 33 mm; alternatively, the internal diameter d of the through-hole 3 is preferably included between 41 and 43 mm, still more preferably equal to 42 mm; alternatively, the internal diameter d of the central through-hole 3 is preferably included between 60 and 61 mm, still more preferably equal to 60.4 mm; still alternatively, the internal diameter d of the central through-hole 3 is preferably included between 76 and 77 mm, still more preferably equal to 76.6 mm; in another preferred embodiment, the internal diameter d of the central through-hole 3 is preferably included between 48 and 49 mm, still more preferably equal to 48.5 mm.

Similarly to what has been stated above, an external diameter D and/or a thickness S of the revolving member 1 can be such as to advantageously allow the insertion into their seats of known spring-holder boxes aimed to house traditional containing boxes of rolling rollers; the external diameter D and the thickness S can therefore be defined in compliance with diameters and thicknesses of housing seats for rolling rollers of known spring-holder boxes that are most widely used; taking into account what has been stated above, the external diameter D is preferably included between 99 and 101 mm, still more preferably equal to 100 mm; alternatively, the external diameter D is preferably included between 72 and 74 mm, still more preferably equal to 73; in another preferred embodiment, the external diameter D is preferably included between 115 and 117 mm, still more preferably equal to 116 mm. Similarly, thickness S is preferably included between 15 and 17 mm, still more preferably equal to 16 mm; alternatively, thickness S is preferably included between 10 and 11 mm, still more preferably equal to 10.5 mm; in another preferred embodiment, thickness S is preferably included between 15 and 16 mm, still more preferably equal to 15.3 mm.

It is clear that the revolving member 1 according to the present invention, in addition to be able to have any other size in addition to the above-listed ones, can be defined by any other combination of values of internal diameter d, external diameter D and thickness S that have been preferably included above.

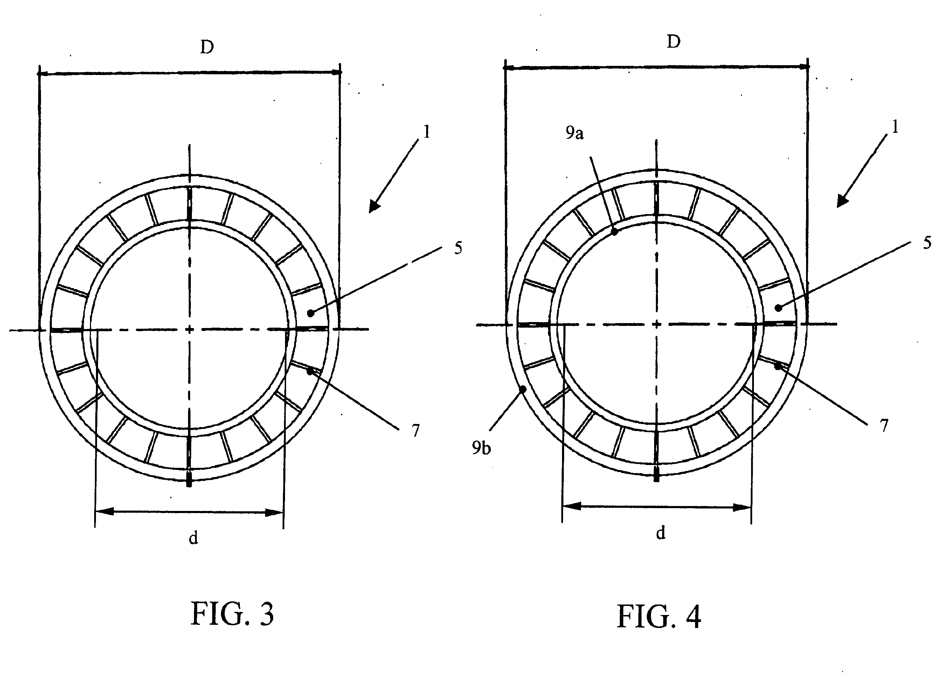

Without changing what has been previously stated, with reference now in particular to FIG. 2 and 3, it is possible to note a variation of the revolving member 1: due to reasons of economy of the self-lubricating material and of weight saving, it is possible to provide a side of the revolving member 1 ring with a recess 5 shaped as a circular crown, concentric with the through-hole 3, preferably equipped with a plurality of radial stiffening ribs 7. The recess 5 can obviously also be of the through-type: in such case, and as shown in FIG. 4, the revolving member 1 ring will be configured as internal ring 9a equipped with the through-hole 3 and an external ring 9b, internal ring 9a and external ring 9b being joined by radial ribs 7.

The revolving member 1 has so far been described, preferably, as an homogeneous and uninterrupted ring; in an alternative, not shown version thereof, the revolving member 1 can be composed of many circumferential ring portions that are able to be mutually assembled, preferably of two half-rings mutually joined by securing means like at least one screw, one bolt, one dowel or by engagement or gluing; under such configuration, it is obvious that it is advantageously possible to apply or remove the revolving member 1 from its own installed spring-holder box without the need of having to free at least one end of the winding shaft in order to withdraw the whole spring-holder box, such characteristic implying an important saving of times and costs in maintenance activities.

The revolving member 1 can obviously be manufactured of any self-lubricating material that has the physical and mechanical properties adapted to guarantee its adequate operation in its specific field of application. For such purpose, it has been preferable, and complying with all desired requirements aimed to simultaneously obtain the necessary reliability and competitive manufacturing costs, to use an acetalic resin having as its major properties:di una resina acetalica avente come principali proprietà: dimensional stability, stiffness, fatigue and corrosion resistance, very low friction coefficient, in addition to resistance to very high thermal differences and wide temperature ranges. A currently-marketed example of such acetalic resin is the family of resins called Delrin® (in particular, Delrin® 100) produced by company DuPont of Nemours (France).

As previously stated, it is easy to appreciate that the revolving member 1 according to the present invention has all the following features:
- it can be easily and economically manufactured since it does not require several and different mechanical workings, as occurs for traditional rolling rollers;
- it is of a more efficient and reliable operation, since it is more resistant to fatigue and wear than traditional rolling rollers, and does not generate deteriorations or damages to the winding shaft;
- it can be easily used on traditional spring-holder boxes replacing their rolling rollers.

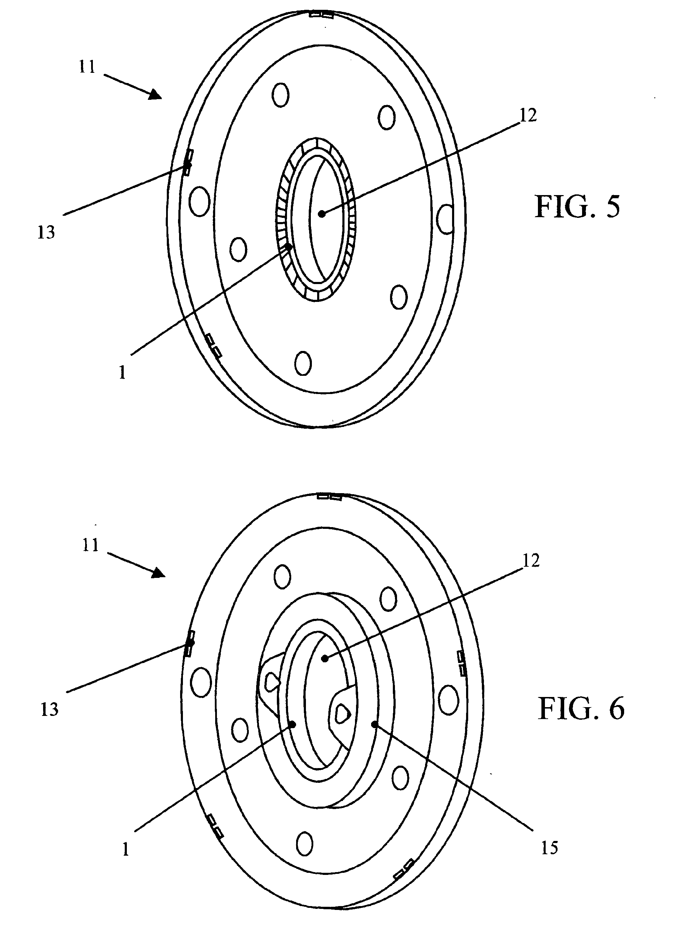

The spring-holder device for rolling gates and rolling shutters is composed of at least two supporting disks (of which only one is shown in FIG. 5 and 6, designated with reference 11) that are substantially equal one to the other, each one equipped at its own center with a through-hole 12 adapted to allow the passage of a winding shaft (not shown) and a plurality of spacers (not shown), that are able to be inserted in suitable securing slots 13, adapted to mirror-like connect and to suitably mutually space two disks 11 in such a way as to create between them an appropriate space for housing a compensating spring. Concentrically to the through-hole 12, a housing seat is arranged, that is preferably equipped with securing means, with at least one revolving member 1 made of self-lubricating material replacing the traditional rolling rollers or, more generally, the known revolving systems. For the correct operation of the revolving member 1, and in particular of the spring-holder device according to the present invention, it is clear that the through-hole 12 diameter must be concentric and greater than the internal diameter d of the through-hole 3 of the revolving member 1.

With particular reference to FIG. 6, the above securing means can be realised like a locking plate 15 of the revolving member 1 in its own housing seat secured to the supporting disk 11 and also equipped with a concentric through-hole whose diameter is greater than the internal diameter d of the through-hole 3 of the revolving member 1. Obviously, by adequately defining the securing means, the revolving member 1 can be indifferently arranged in such a way as to rotate only related to the winding shaft with which it cooperates and remains integral to its own supporting disk 11, or rotates both relatively to the winding shaft and, in its own housing set, relatively to its own supporting disk 11.

As described above, it is clear that the spring-holder device for rolling gates and rolling shutters equipped with the revolving member 1 can be manufactured more easily and economically since it does not require the mechanical workings related to the manufacture and securing of traditional rolling rollers; moreover, the spring-holder device according to the present invention is obviously more efficient and reliable, since the revolving member 1 with which it is equipped is more resistant to fatigue and wear than the traditional rolling rollers and does not generate deteriorations or damages to the winding shaft. It is also extremely advantageous both from the production and from the economic points of view, that the supporting disks 11 and the spacers of the spring-holder device according to the present invention can be those traditionally used in known spring-holder boxes, without any particular manufacturing modification, since the revolving member 1 can be easily and advantageously housed in the seat of rolling rollers by replacing them.

## Claims

1. Revolving member (1) made of self-lubricating material, **characterised in that** it is adapted to be used as rolling means for spring-holder boxes on a winding shaft for rolling gates and rolling shutters, said revolving member (1) being a ring equipped with a central through-hole (3) adapted to allow said winding shaft of said rolling gates and rolling shutters to pass therethrough.

2. Revolving member (1) according to claim 1, **characterised in that** it has an the internal diameter d of the central through-hole 3 preferably included between 32 and 34 mm, still more preferably equal to 33 mm.

3. Revolving member (1) according to claim 1, **characterised in that** it has an internal diameter d of the through-hole 3 preferably included between 41 and 43 mm, still more preferably equal to 42 mm.

4. Revolving member (1) according to claim 1, **characterised in that** it has an internal diameter d of said central through-hole (3) preferably included between 60 and 61 mm, still more preferably equal to 60.4 mm.

5. Revolving member (1) according to claim 1, **characterised in that** it has an internal diameter d of said central through-hole (3) preferably included between 76 and 77 mm, still more preferably equal to 76.6 mm.

6. Revolving member (1) according to claim 1, **characterised in that** it has an internal diameter d of said central through-hole (3) preferably included between 48 and 49 mm, still more preferably equal to 48.5 mm.

7. Revolving member (1) according to claim 1, **characterised in that** it has an external diameter D preferably included between 99 and 101 mm, still more preferably equal to 100 mm.

8. Revolving member (1) according to claim 1, **characterised in that** it has an external diameter D preferably included between 72 and 74 mm, still more preferably equal to 73 mm.

9. Revolving member (1) according to claim 1, **characterised in that** it has an external diameter D preferably included between 115 and 117 mm, still more preferably equal to 116 mm.

10. Revolving member (1) according to claim 1, **characterised in that** it has a thickness S preferably included between 15 and 17 mm, still more preferably equal to 16 mm.

11. Revolving member (1) according to claim 1, **characterised in that** it has a thickness S preferably included between 10 and 11 mm, still more preferably equal to 10.5 mm.

12. Revolving member (1) according to claim 1, **characterised in that** it has a thickness S preferably included between 15 and 16 mm, still more preferably equal to 15.3 mm.

13. Revolving member (1) according to claim 1, **characterised in that** it is equipped with a recess (5) shaped as a circular crown concentric to said through-hole (3).

14. Revolving member (1) according to claim 13, **characterised in that** said recess (5) is equipped with a plurality of radial stiffening ribs (7).

15. Revolving member (1) according to claim 13 or 14, **characterised in that** it comprises an internal ring (9a) equipped with said through-hole (3) and an external ring (9b), said internal ring (9a) and said external ring (9b) being joined by said radial ribs (7).

16. Revolving member (1) according to claim 1, **characterised in that** it is composed of circumferential portions of said ring that are able to be assembled.

17. Revolving member (1) according to claim 16, **characterised in that** said circumferential portions of said ring are tow half-rings.

18. Revolving member (1) according to claim 16, **characterised in that** said circumferential portions of said ring are assembled through securing and/or engaging and/or gluing steps.

19. Revolving member (1) according to any one of the previous claims, **characterised in that** said self-lubricating material is acetalic resin.

20. Spring-holder device for rolling gates and rolling shutters, **characterised in that** it comprises two supporting disks (11), each one of said supporting disks (11) being equipped at its own center with a through-hole (12), adapted to allow a winding shaft to pass therethrough, and with a housing seat for said revolving member (1) that is concentric to said through-hole (12), and with a plurality of spacers adapted to mirror-like connect and to mutually space said supporting disks (11).

21. Spring-holder device according to claim 20, **characterised in that** it comprises securing means of said revolving member (1) in said housing seat.
